# EUROPEAN PATENT APPLICATION

(11) **EP 4 725 316 A1**
(43) Date of publication of application: **15.04.2026**
(21) Application number: 24206258.6
(22) Date of filing: 11.10.2024
(51) Int. Cl.: A23C 19/076, A23C 19/084, A23C 19/09, A23C 19/14, B01D 61/14, A23C 9/123

(54) **PROCESS OF PREPARING FRESH AND SPREADABLE CHEESES**

(71) Applicant: Granarolo S.P.A., 40127 Bologna (BO) (IT)
(72) Inventor: De Laude, Luca, 40127 Bologna BO (IT); Dellea, Cristina, 40127 Bologna BO (IT)
(74) Representative: Perani & Partners S.p.A.

(57) **Abstract**

Process for the preparation of fresh spreadable cheeses from fresh and/or semi-cured and/or cured cheeses.

## Description

### FIELD OF THE INVENTION

The present invention relates to a process for preparing fresh and spreadable cheeses, preferably with reduced fat and/or high protein content and/or comprising lactic and/or probiotic ferments.

### BACKGROUND OF THE INVENTION

The category of spreadable cheeses includes two subclasses: those known as processed cheeses and fresh spreadable cheeses of the type defined as Fromage blanc.

### Processed cheeses

Processed cheeses are generally obtained from different types of cheeses in order to recover and enhance poorly profitable and/or depreciated dairy products due to defects.

Processed cheeses are generally made from cured cheeses and have a long shelf life, even at room temperature.

Processed cheeses can be obtained from a single cheese or from a mixture of several cheeses to which is added, depending on the recipe, curds, cream, butter, milk and whey powders and are distinguished by their "solubility" which allows them to be dispersed in water or hot broth to supplement meals or soups.

This "solubility" is provided by the use of emulsifying salts, which have the ability to break down and disperse the casein micelles of cheese so that the proteins can hydrate and structure themselves into more or less organized homogeneous pastes according to the desired characteristics of the finished product.

These characteristics are: spreadability, consistency, for example, the finished product can be used in a sandwich and/or must be used in preparations of dishes in which the cheese must be spread or melted.

A processed and spreadable cheese essentially has the following requirements:
- removal of calcium from the protein structure
- protein degradation and dispersion
- hydration and swelling of colloidal particles
- pH stabilization by buffering effect
- structuring by cooling.

Various types of cheeses (depending on the recipe) and also at times the other ingredients (cream, butter, ricotta cheese, mixed ricotta cheese...) are added with water and emulsifying salts (citrate and sodium polyphosphates), kneaded, subjected to heating (melting) and stirring so as to obtain a stable and homogeneous emulsion in which water, fat and salt are kept uniformly dispersed. The treatment temperature (°C) of the process described above is comprised between 75°C-100°C but it can also reach 120°C, by means of steam injection heat exchangers.

The emulsifying salts prevent the loss of water and the separation of fat from the cheese; they also cause the decalcification of the casein micelles with partial replacement of calcium with the sodium of the same salts. Following decalcification, the proteins no longer organized in a micelle structure acquire the property of hydrating and swelling around a layer of water molecules thanks to the negative surface charges, which increase after decalcification as they are freed from calcium and are immediately saturated by sodium. The combination of caseins with sodium allows the formation of sodium caseinates which, being more soluble than the caseins themselves, are therefore more dispersible, helping to keep the fat in emulsion.

The emulsifying salts normally used are:
- sodium citrates
- sodium polyphosphates with different phosphorus/sodium ratio.

Emulsifying salts are essentially thickeners, stabilizers, emulsifiers.

The choice of the type of emulsifying salts to be used depends on the cheese(s) to be processed and on the pH of the finished product to be obtained, which generally ranges from 5.40 to 5.90.

The consistency of the final product depends on:
- the composition of the initial mixture to be processed (cheeses/cheese cuttings/ butter/water...)
- the concentration of the emulsifying salts
- the processing pH (for cutting cheeses, work is done at a pH between 5.70-5.60 while for spreadable cheeses 5.70-5.90)
- cooling rate of the melted mass (slow cooling allows for a final product of greater consistency and greater gel/sol ratio).

The use of nisin (E234) as an antimicrobial is allowed in the production of processed cheeses: the maximum allowed level is 12.5mg/kg (see EU Reg. 1129/2011).

Italian legislation stipulates that processed cheeses must have a minimum fat content of 35% on the dry matter, which for Swiss cheeses of the same category stands at 42%.

However, this type of cheese generally contains a whole series of ingredients, in addition to cheese, in order to give them a spreadable consistency and its storage even at room temperature, such as emulsifying agents, and have a prolonged commercial life (e.g: preservatives, added salt).

In fact, US2001/0018087 discloses such a process which envisages the presence of chemical emulsifiers such as polysorbates, antifungal agents such as potassium sorbate, and anti-synergistic agents such as starch.

### Fresh spreadable cheeses

The category of fresh spreadable cheeses includes all those fresh paste cheeses.

### Fromage blanc

These include Fromage blanc with a smooth, soft paste, white colour and a creamy but solid texture. The cheese paste produced by acidifying low-fat milk can be homogenized before packaging to obtain a smoothed cheese, or packaged as whole clot, in this case obtaining a moulés cheese (mould) with the characteristic structure of rustic, granular cheese (due to lactic coagulation) of milk.

Fromage blanc can be prepared with the traditional method based on the use of raw milk normally pasteurized at temperatures > 92°C for a few seconds. Milk cooled to a temperature of 18-23°C is added with mesophilic lactic ferments (*Streptococchus lactis* to *Streptococchus diacetylactis*) in the form of lacto-ferment in amounts ranging from 1 to 3%. It is followed by the addition of a small amount of liquid rennet at standard titre. The concomitant acidification and coagulation last for varying times depending on the technologies, from 6 to 24 hours, until obtaining a pH varying between 4.30 and 4.60 and a whey acidity of about 12-15 SH/50,

The whey is purged at variable temperatures comprised between 8 and 22°C, depending on the cheese to be obtained (higher temperatures for rapid purge products of industrial type, lower temperatures for more artisanal products from only partially skimmed milk and more humid). The separation of the whey is in any case a rather long procedure and can be carried out with different techniques.
1) In traditional moulds (used for granular fromage blanc)
2) Canvas bags or Berge filters
3) In Schulenburg boiler (patented method)
4) Centrifugation

The first two technologies require considerable labour for humidity control and are highly dependent on curd acidification and temperature. The Berge process is easier to use, but also for this reason, as with the previous technology, the processing is discontinuous and highly subject to the possibility of product contamination.

The Schulemburg system consists of special boilers, in which, once the product has coagulated, porous septa are lowered to allow the whey to flow out, retaining the curd. Another method involves separating the whey by centrifuging the curd.

This system is based on the use of centrifugal separators which exploit the different density of whey and curd.

Recently, several technologies have been developed to improve the yields of fromage blanc, including ultrafiltration, which is used for different purposes:
- Standardization of protein content;
- formation of a pre-cheese of the moule or smoothed type;
- separation of the whey from the curd.

Protein content standardization or milk enrichment is common practice for the production of this cheese.

It is made either by adding powdered milk or caseinates in quantities up to 15% by weight of the total solids content of the milk, or by subjecting the milk to ultrafiltration. In this case the milk is concentrated up to a protein content of 35-50 g/l.

The standardization of milk entails some advantages including, in addition to a constant composition of the cheese, also an increase in yield (about 1.2kg of dry substance in the cheese for each kg of powder added to the milk) a more regular purging of the whey with less loss of fine curd in the whey.

In the preparation of a pre-cheese for the production of a moulé product, ultrafiltration must be carried out at very low temperatures, from 15 to 20°C, so as to avoid excessive dehydration.

Ultrafiltration in the preparation processes of a moulé or smoothed fromage blanc is carried out in different stages.

For example, in the preparation process of the smoothed product it is carried out upstream of the curd homogenization, while in the production of the moulé product it is carried out downstream of the acidification, but before coagulation by addition of rennet.

In this case, before adding the rennet, the retentate is left to rest for about 1 to 2 hours before adding the rennet.

Other types of cheeses which are prepared using manufacturing processes similar to the one used for obtaining fromage blanc include Quark.

### Quark

We mention quark among other fresh spreadable cheeses, which represents the progenitor of acid coagulation cheeses (coagulation by means of the use of lactic ferments), but rennet can also be used together with lactic ferments. It is a fresh cheese native to northern and central Europe whose technology has undergone several technological changes over time, and is now mainly produced by means of the Ultrafiltration (UF) technique.

It is prepared with the following technique.

The process starts with low-fat milk, previously skimmed, then pasteurized, fermented between 30°C-40°C with mesophilic lactic cultures or thermophilic lactic cultures + mesophilic lactic cultures + rennet. The formed clot is broken and concentrated by UF in order to increase the protein content (OBJ= 10-14%). The concentrate is then packaged as such and/or added with fruit and/or other sweet semi-finished products.

### Fresh Robiola and Goat cheeses

Typical fresh and spreadable Italian cheeses are, for example, robiolas, creamy, fatty cheeses, with Cream Cheese type technology (Quark type cheese + 9-14% cream). The paste is semi-fluid, and pasteurized milk enriched with cream and the addition of mesophilic lactic ferments and little rennet is used in the production. The separation of the casein clot from the whey occurs by centrifugation. Sometimes salt and potassium sorbate are also added as an anti-mould agents.

Goat cheeses are homogeneous paste cheeses, white in colour, with a delicate taste if they are fresh goat cheeses. They are produced with whole or partially skimmed milk (goat's milk or a mixture: goat's + cow's milk) to which lactic acid ferments are added. The coagulation process is slow (minimum 12h) and at T°C=18-26°C. The purge is carried out for approximately 12h, at the end of which the curd is added with salt and sorbate and placed in generally cylindrical moulds. Immediately afterwards, the goat cheeses are packaged.

All the techniques disclosed above are not very versatile because to obtain fresh spreadable cheese, they only start from milk, thus precluding the possibility of obtaining fresh spreadable cheeses from cured or semi-cured cheeses and they allow to obtain a fresh spreadable cheese also from cured or semi-cured cheeses with reduced fat content even less. In fact, in EP 731644 a process is disclosed for preparing a fresh spreadable with low fat content comprised between 0 and 10%, which obtains this directly from the corresponding standardized milk, with the desired fat content and comprising the following stages:
- standardization of milk with the desired fat content,
- addition of fermented cultures or acidifying substance, a coagulating enzyme in order to reach a pH comprised between 4.5 and 4.9 and thereby obtain casein coagulation;
- heating between 45 and 60°C, and diafiltration or ultrafiltration to obtain a dry extract greater than 25%,
- heating to a temperature above 65°C and preferably between 70°C and 75°C to denature the proteins
   homogenization of the retentate at a pressure comprised between 10 and 40MPa and packaging in containers, without adding other ingredients to the product thus obtained, such as: emulsifiers, whey proteins.

Furthermore, the aforesaid traditional techniques do not allow to obtain fresh spreadable cheeses from cheeses such as stracchino, feta, quartirolo.

### SUMMARY OF THE INVENTION

The applicant has now found that it is possible to obtain fresh spreadable cheeses with reduced calorie content, not only starting from fresh cheeses but also using semi-cured or cured cheeses, starting from the corresponding fresh, cured or semi-cured cheeses. Therefore, the object of the present invention is a process for the preparation of fresh spreadable cheeses, with reduced fat content, and with live lactic ferments based on fresh cheeses and/or semi-cured and/or cured cheeses which comprises the following stages:
A. providing a fresh, semi-cured or cured cheese;
B. possible trimming in case the cheese is semi-cured or cured, for example by removing the crust,
C. treating the cheese coming from stage A or stage B by:
   i) cutting/chopping and simultaneous line heating at a temperature comprised between 60°C and 75°C;
   ii) maintaining under stirring, at a temperature comprised between 60°C and 75°C, for a time comprised between 5 and 10 minutes;
   iii) cooling under stirring, at a temperature comprised between 35°C and 40°C;
D. preparing a lean, white fermented base comprising the following stages:
   iv) Fermenting at a temperature comprised between 35°C-40°C;
   v) concentrating the fermented lean base by ultrafiltration at the same temperature as in the previous stage;
E. mixing the treated cheese coming from the step with the white, fermented lean and concentrated base coming from stage D, at a temperature comprised between 35°C and 40°C;
F. further mixing of the preparation from stage E.
G. smoothing of the preparation from stage F and obtaining a smooth and spreadable soft homogeneous fluid mass
H. packaging between 35°C and 40°C, preferably in a modified atmosphere, more preferably in N2 60-80%V 40-20% VCO2, cooling and storage at a temperature comprised between +2°C and +6°C.

The spreadable cheese which is the subject matter of the present invention, thanks to the innovative preparation process, has a reduced fat content both with respect to the fats contained in the starting cheeses as such, and with respect to the average of the spreadable cheeses currently on the market.

Moreover, thanks to the fact that it contains a fermented white base, fresh spreadable cheeses are also rich in live lactic ferments since at the temperature of the stages D-H (35°-40°C), lactic bacteria are vital.

Therefore with respect to the spreadable cheeses available on the market, the fresh cheeses obtained with the process which is the subject matter of the present disclosure are decidedly healthier, not only because they have a reduced fat content with respect to the starting cheese, but also because they contain lactic bacteria and above all they are substantially free of food additives, and emulsifying salts.

Finally, thanks to the fact that the fermented white base has been subjected to ultrafiltration, they also have a higher protein content, with respect to the corresponding starting products. A further object of the present invention is the fresh spreadable cheese containing lactic acid bacteria obtained with such a process.

Lastly, we would like to point out that the process of the invention does not start from milk, but from final processing products such as pre-constituted cheese or from processing intermediates in the production of other dairy products such as fermented and ultra-filtered white base, has the undeniable economic advantage in that it can be easily integrated into plants used for the aforesaid processing.

### DESCRIPTION OF THE FIGURES

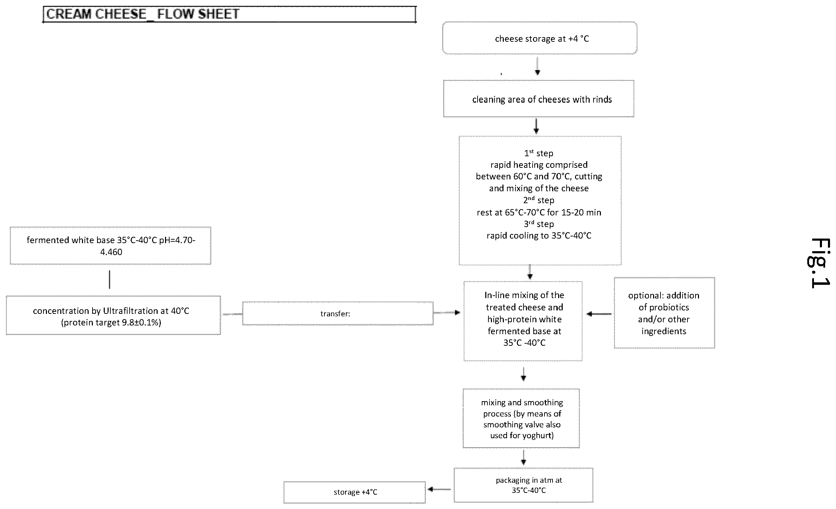

Figure 1 depicts a block diagram of an embodiment for carrying out the process of the invention.

### DETAILED DESCRIPTION OF THE INVENTION

For the purposes of the present invention, the definitions "comprising" or "containing" mean that further stages and/or components not expressly listed in the list following such a definition are not excluded.

On the contrary, the definitions "constituted by" and "consisting of" exclude the presence of further components and/or stages not expressly listed after such a definition.

For the purposes of the present invention, the definition of food additives is understood as that given in Community legislation EU Regulation No. 1129/2011 amending Annex II of Regulation (EC)1333/2008, establishing a list of food additives.

Food additives include, for example, dyes, preservatives, antioxidants, acidity regulators, thickeners, stabilizers, emulsifiers, anti-caking agents, flavour enhancers, etc.

The starting fresh and/or cured or semi-cured cheese used in the process according to the present invention is preferably of Italian and/or European tradition, such as: Camembert, emmentaler, roquefort, White Stilton, Blue Stilton, Gouda, stracchino, feta, blue cheese, quartirolo, scamorza, fontina, taleggio, gorgonzola, blue-veined cheeses, Parmigiano Reggiano, Grana padano, pecorino sardo, pecorino romano, or combinations thereof, preferably the cheese is also PDO.

For the purposes of the present invention, the acronym PDO (Protected Designation of Origin) is a trademark registered with the European Community to indicate a typical high-quality Italian product, whose area of origin and the traditions used to date to create it make it so peculiar that it must be protected from counterfeiting.

The fermented and concentrated lean white base has a pH comprised between 4.70 and 4.46 and can be fermented milk, therefore comprising live lactic and/or probiotic ferments, such as yoghurt, or a lean cheese, preferably quark, or is a mixture of both.

In the process according to the present invention, stage C-i) comprises the addition to the at least one cheese of a further dairy product chosen from: ricotta, cream, or combinations thereof in order to implement the taste of the finished product and/or make the starting cheese itself better mixable with the concentrated fermented white base.

The addition of such ingredients is preferably comprised between 2% and 40% by weight on the total weight of the fresh spreadable cream (w/w), more preferably between 5% and 20%.

Stage C-ii) is preferably carried out at a temperature comprised between 60°C and 70°C, more preferably 70°C, for a time comprised between 5 and 15 minutes, preferably 10 minutes.

In the process which is the subject matter of the present invention, the cheese is added in a quantity comprised between 15% and 80%, preferably between 25% and 70%, preferably between 20% and 60%, preferably between 30% and 67%, preferably between 40% and 50%, preferably 50% by weight on the total weight of the spreadable cheese (w/w).

In the process according to the present invention the fermented base is preferably added in a quantity comprised between 20% and 85%, preferably between 50% and 65%, preferably 60% by weight on the total weight of the spreadable cheese (w/w).

In stage D the ultrafiltration process is carried out to obtain a solids concentration preferably comprised between 14% and 16% and a protein content comprised between 8 and 11%, preferably between 9.8 and 10% by weight of the retentate.

Stage G of the process of the invention which is typically employed in the production of homogeneous yoghurt, has the aim in the present process of obtaining a final product which is completely smooth, shiny, homogeneous and spreadable, soft, creamy in the mouth.

The packaging of the fresh spreadable cheese preferably occurs in a modified atmosphere and even more preferably in the N₂/CO₂ volumetric ratios reported above. Thereby, the shelf life of the finished product can be extended without adding preservatives in the process.

The packaging of the fresh spreadable cheese from stage G is carried out in-line by distributing it in packages usually used for such products, such as trays, glass jars, squeezable tubes, bricks, single-dose sachets, etc.

A further object of the present invention is the fresh spreadable cheese obtained with the process of the invention comprising: a fresh and/or semi-cured and/or cured cheese in a quantity comprised between 15% and 80% by weight on the total weight of the finished product and a white fermented base in a quantity comprised between 20% and 85%.

The spreadable cheese thus obtained, while having the distinctive taste of the cheese initially used as referred to above, preferably has a reduction in fat with respect to the starting cheese of between 15 and 85%, preferably between 50 and 65%, preferably 60% with respect to the fat content of the starting cheese.

The fresh spreadable cheese which is the subject matter of the invention can also be used for multiple purposes: for example it can be spread as is: on bread, on crackers and/or on canapés for aperitifs, appetizers, snacks etc., or as an alternative to other cheeses in the case of a second course, or in pasta and rice first courses, (for example rice and pasta with gorgonzola with the unmistakable flavour of gorgonzola but less caloric) as a condiment of raw vegetables in crudités, for the preparation of savoury pies or mousses, etc.

The following examples are given for the sole purpose of illustrating the preparation process of the invention.

### EXAMPLES

### No. 1-Stracchino 1st recipe

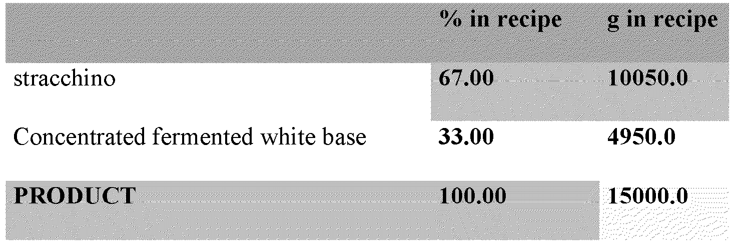

1) heating the stracchino to 70°C
2) treatment at 70°C for 10-15': obtaining a liquid mass
3) cooling to 40°C under stirring (approx. time 15')
4) adding the concentrated fermented white base at 40°C
5) mixing the two ingredients at 40°C for 15' - 20'
6) smoothing at 40°C (with smoothing valve of the mixture obtained in point 5)
7) packaging at 30°C-35°C in modified atmosphere
8) in-line cooling at +2°C-+4°C.

### No. 2 - Stracchino

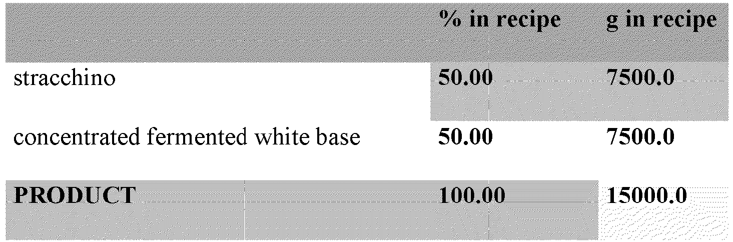

1) heating the stracchino to 70°C
2) treatment at 70°C for 10-15': obtaining a liquid mass
3) cooling to 40°C under stirring (approx. time 15')
4) adding the concentrated fermented white base at 40°C
5) mixing the two ingredients at 40°C for 15' - 20'
6) smoothing at 40°C (with smoothing valve of the mixture obtained in point 5)
7) packaging at 30°C-35°C in modified atmosphere
8) in-line cooling at +2°C-+4°C.

### No. 3 - recipe with gorgonzola

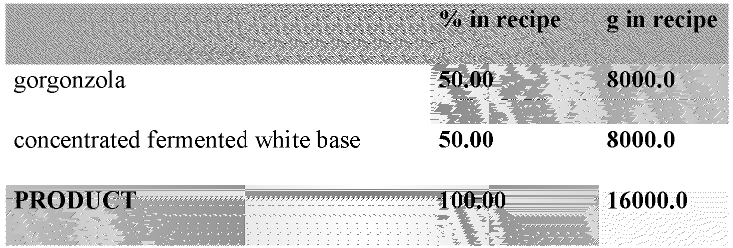

1) cleaning gorgonzola moulds (rind removal) and cutting
2) heating the gorgonzola to 70°C under stirring
3) treatment at 70°C for 10-15': obtaining a semi-liquid mass
4) cooling to 40°C under stirring (approx. time 15')
5) adding the concentrated fermented white base at 40°C
6) mixing the two ingredients at 40°C for 15 -20'
7) smoothing at 40°C (with smoothing valve of the mixture obtained in point 6)
8) packaging at 30°C-35°C in modified atmosphere.
9) in-line cooling at +2°C-+4°C.

### No. 4 - recipe with feta

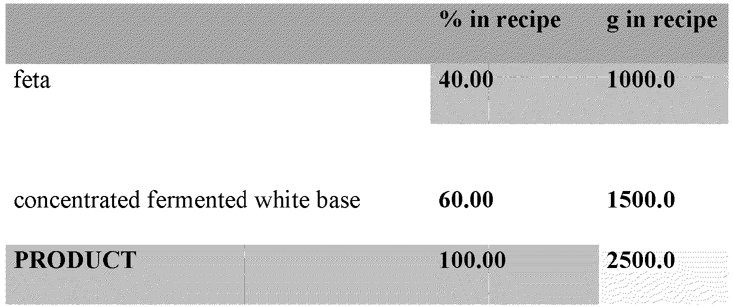

1) heating the stracchino to 70°C
2) treatment at 70°C for 10-15': obtaining a liquid mass
3) cooling to 40°C under stirring (approx. time 15')
4) adding the concentrated fermented white base at 40°C
5) mixing the two ingredients at 40°C for 15'- 20'
6) smoothing at 40°C (with smoothing valve of the mixture obtained in point 5)
7) packaging at 30°C-35°C in modified atmosphere
8) in-line cooling at +2°C-+4°C.

### REFERENCES

"Chimica e tecnologia del latte"
Author: Cesare Corradini
Edition: tecniche nuove" 1995
Trattato di Tecnologia casearia"
Author: Ottavio Salvadori del Prato
Publisher: Edagricole
Year: 1998

## Claims

1. Process for the preparation of fresh spreadable cheeses, with reduced fat content, containing live lactic bacteria and rich in proteins based on fresh and/or semi-cured and/or cured cheeses comprising the following stages:
A. providing a fresh, semi-cured or cured cheese;
B. possible trimming in case the cheese is semi-cured or cured, for example by removing the crust,
C. treating the cheese coming from stage A. or stage B. by:
i) cutting and heating at a temperature comprised between 60°C and 75°C;
ii) maintaining under stirring, at a temperature comprised between 60°C and 75°C, for a time comprised between 5 and 10 minutes;
iii) cooling under stirring, at a temperature comprised between 35°C and 40°C;
D. preparing a lean, white fermented base comprising the following stages:
iv) fermenting at a temperature comprised between 35°C-40°C;
v) concentrating the fermented lean base by ultrafiltration at the same temperature as in the previous stage,
E. mixing the treated cheese coming from the step with the white, fermented lean and concentrated base coming from step D, at a temperature comprised between 35°C and 40°C;
F. further mixing of the preparation from step E;
G. smoothing of the preparation from step F;
H. packaging between 35°C and 40°C in a modified atmosphere and cooling and storage at +2°C - + 4°C.

2. Process according to claim 1, wherein the cheese is selected from: stracchino, feta, quartirolo, scamorza, fontina, taleggio, gorgonzola, blue cheeses, Parmigiano Reggiano, Grana Padano, pecorino sardo, pecorino romano, Camembert, Emmentaler, Roquefort, White Stilton, Blue Stilton, Gouda or combinations thereof, preferably the cheese is also PDO.

3. Process according to claim 1 or 2, wherein the fermented base has a pH comprised between 4.70 and 4.46 and can be fermented milk thus comprising live lactic ferments, such as for example yoghurt or it comprises rennet and is a cheese, preferably quark, or is a mixture of cheese and yoghurt.

4. Process according to any one of claims 1 to 3, wherein stage C-ii) is carried out at a temperature comprised between 65°C and 70°C, preferably 70°C, for a time comprised between 10 and 15 minutes, preferably 15 minutes.

5. Process according to any one of claims 1 to 4, wherein stage C-i) comprises adding to the at least one cheese an additional dairy product selected from: ricotta, milk cream.

6. Process according to any one of claims 1 to 5, wherein the at least one cheese is added in a quantity comprised between 15% and 85%, preferably between 20% and 70%, preferably between 20% and 60%, preferably between 30% and 67%, preferably between 40% and 50%, preferably 50% by weight on the total weight of the spreadable cream (w/w).

7. Process according to any one of claims 1 to 6, wherein the fermented base is added in a quantity comprised between 15% and 85%, preferably between 50% and 65%, preferably 60% by weight on the total weight of the spreadable cream (w/w).

8. Process according to claim 5, wherein the additional dairy product is added in a quantity of less than 20%, preferably comprised between 10% and 15% by weight on the total weight of the spreadable cream (w/w).

9. Process according to any one of claims 1-9 wherein stage D. is carried out until a solid concentration preferably comprised between 14% and 16% and a protein content comprised between 8 and 11%, preferably between 9.8 and 10% on the weight of the retentate are obtained.

10. Fresh spreadable cheese containing lactic bacteria obtained by the process according to any one of claims 1 to 9.

11. Fresh spreadable cheese according to claim 11 having a reduction in fat comprised between 15 and 85%, preferably between 50% and 65% preferably 60% with respect to the fat content of the at least of the initial cheese.
